# EUROPEAN PATENT SPECIFICATION

(11) **EP 2 140 947 B1**
(45) Date of publication and mention of the grant of the patent: **18.04.2012**
(21) Application number: 09159322.8
(22) Date of filing: 04.05.2009
(51) Int. Cl.: B05B 15/04, B08B 3/00

(54) **Washing device, equipped with a water heating group, for spray guns and their components**
Mit einer Wasserheizgruppe ausgestattete Waschvorrichtung für Sprühpistolen und deren Komponenten
Dispositif de lavage équipé d'un groupe de chauffage de l'eau pour pistolets vaporisateurs et leurs composants

(30) Priority: 30.06.2008 IT MI20081189
(43) Date of publication of application: 06.01.2010
(73) Proprietor: Rosauto S.r.l., 36054 Montebello Vicentino, (Vicenza) (IT)
(72) Inventor: Rosa, Giuseppe, 36050 Montorso Vic. - Vicenza (IT)
(74) Representative: Martegani, Franco

(56) References cited:
- DE-A1- 3 820 982
- US-A- 5 492 137
- US-A- 5 964 955
- US-A1- 2002 170 978
- US-A1- 2004 200 504

## Description

The present invention relates to a washing device, equipped with a water heating group, for spray guns and their components.

In the painting industry, spray guns, of the bucket or direct suction type, are known for the application of paints or similar materials on a wide variety of products. In particular, in the bucket type, a spray gun mixes compressed air with a paint fed from a container, or bucket. The compressed air jet allows atomized paint to be sprayed externally. The air flow is controlled by a lever situated on the handle of the gun.

For these types of guns the washing phase after use is particularly important in order to eliminate dregs and traces of paint when they are still damp, to guarantee an optimum functioning when the gun is re-used.

A known technique which is currently widely used is the use of a washing device comprising a tank, equipped with a cover, in which the gun to be washed is placed. In the tank, around the gun, there are numerous nozzles, normally conically shaped, which spray washing liquid from all directions towards the gun itself.

The spray gun is placed in a suitable position and a washing nozzle is inserted in a feeding channel of the paint which connects the gun to the bucket.

The bucket is previously dismantled and removed from the gun so that it can also be positioned in the washing device.

To complete the washing of the gun and its components, it is preferable however to effect not only an automatic washing but also a final manual passage so as to remove any possible dregs remaining in points difficult to reach.

In the more outdated washing devices, the washing liquid essentially consisted of water, whereas it was subsequently found that, with the addition of a detergent, better washing results could be obtained. It was also seen that by heating the washing liquid, the result on the guns is further improved, also in the presence of dry paint. Washing devices equipped with an internal heating apparatus, capable of heating tap water destined for washing, with or without mixing with detergent products, were consequently already being produced.

The washing devices for spray guns and their components are normally positioned inside environments where there are also solvent-based paints. As the formation of dangerous and potentially explosive gases is possible in these environments, it is consequently compulsory to install machinery in conformance with the directive 94/9/CE or, in other words, having the so-called "ATEX" (*ATmosphere EXplosion*) certification, i.e. suitable for operating under safety conditions also in the presence of potentially explosive atmospheres.

The washing devices for spray guns are normally of the pneumatic type and can therefore be easily "ATEX" marked. Devices equipped with an integrated electric heater, however, are not only more expensive but it is also difficult for them to obtain the "ATEX" certification. This problem is present also in the washing devices provided by both the documents US 5,964,955 and US 5,492,137.

Indeed, in both those devices, the washing liquid is directly heated by heaters (possibly electric heaters), thereby rising the risk of ignite a potentially explosive fluid or atmosphere, such the ones present during the washing operation of spray guns and their components.

Another problem of the washing devices of the known art concerns the high consumption of clean water taken from the water supply, used for washing the guns. In the presence of detergents, moreover, there is also the drawback of having to suitably dispose of high quantities of washing solution, which can be highly polluting.

A general objective of the present invention is therefore to provide a washing device, equipped with a water heating group, for spray guns and their components, capable of overcoming the drawbacks of the known art described above.

In particular, an objective of the present invention is to provide a washing device for spray guns capable of minimizing the quantity of water and possible detergent products used for washing the guns themselves, at the same time maintaining high cleaning standards.

A further objective of the present invention is to provide a washing device which reduces the emission of polluting substances generated during the cleaning phase of the guns and their components, to the maximum.

Another objective of the present invention is to provide a particularly economical device which is fully in conformance with the safety regulations in force in the relative application field.

In view of the above objectives, according to the present invention, a washing device has been conceived, equipped with a water heating group, for spray guns and their components having the characteristics specified in the enclosed claims.

The structural and functional characteristics of the present invention and its advantages with respect to the known art will appear even more evident from the following description, referring to the enclosed drawings, which show a washing device for spray guns and their components according to the innovative principles of the same invention.

In the drawings:
figure 1 shows a schematic sectional side view of an embodiment of a washing device for spray guns and their components according to the invention, in an operating phase;
figure 2 shows, in a schematic sectional and exploded side view, a component of the washing device of figure 1;
figure 3 shows the component of figure 2 in an assembled configuration;
figure 4 is a schematic side view of another possible embodiment of the invention;
figure 5 is an enlarged detail illustrating the electric heater of the embodiment of figure 4; and
figure 6 is a detail like figure 5 but illustrating another possible embodiment of the electric heater.

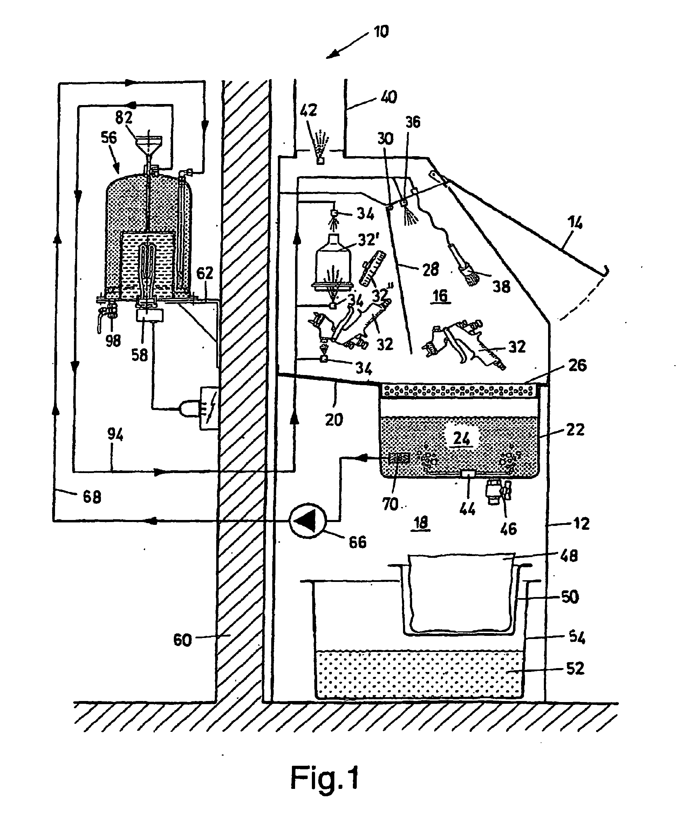

With reference in particular to figure 1 of the enclosed drawings, this shows a washing device for spray guns and their components according to a possible embodiment of the present invention, indicated as a whole with the reference number 10. The device 10 - preferably, but not necessarily - comprises a boxed casing 12, equipped with a sealing closure door 14, preferably in the front. The casing 12 has an upper washing zone 16 and a lower collection and feeding zone of the washing liquids 18 which are separated from each other. The washing zone 16 is separated from the collection and feeding zone 18 by a septum 20, fixed to the boxed casing 12 and integral with a collection tank 22 of the dirty water 24 (recovered or recycled liquid as is better explained hereunder). A gridded or perforated surface 26 which acts as a support for the elements to be washed and for draining the washing liquid 24 towards the underlying collection tank 22, rests firmly and removably on the collection tank 22.

The washing area 16 according to this non-limiting embodiment of the invention, is further divided into two distinct areas, separated by a protection door 28. The door 28 is hinged on the top by means of hinges 30, to the structure of the boxed casing 12 so that it oscillates between an open position which allows access to the first more internal area of the washing zone 16, and a closed position which separates the two areas of the washing zone 16 itself.

In the more internal area of the washing zone 16, there are supports for the automatic washing of a gun 32 and relative components, such as for example, the bucket 32' and the lid 32", in addition to automatic washing nozzles or ejectors 34, suitably positioned. In the outer area of the washing zone 16, where the manual washing is effected, there are one or more sprayers 36 and possibly a brush 38, fed with liquid, for manual washing.

The boxed casing 12 also has a hood configuration above, in order to send and remove the vapours generated inside, and at the top, it is equipped with a suction duct 40 of the vapours to be sent into the atmosphere, possibly filtering them by means of a suitable filtering unit (not shown). For the expulsion of the vapours, there can be a blowing device 42 facing outwards, at the mouth of the suction duct 40.

The collection and feeding zone 18 has, starting from above, an upper collection tank 22 which collects the washing liquid 24, and which comprises a mixer 44 for the liquid mixture 24 comprising water, paint, and coagulating agent. The latter is introduced into the tank 22 to cause the coagulation or flocculation of the paint for its subsequent separation from the liquid phase. The collection tank 22 is also equipped with a discharge valve 46 of the washing liquid 24.

Under the collection tank 22, there is a filter bag 48 suitable for receiving the washing liquid 24 (i.e. the water-paint mixture and coagulated paint) to separate the coagulated solid phase. The filter bag 48 is contained and supported inside a perforated container 50 through which the filtered water 52 passes into the underlying container 54.

The washing device 10 also comprises an electric heating group 56, equipped with a thermostat 58 and connections to the electric power supply to allow its feeding. The electric heater 56 is positioned externally with respect to the boxed casing 12 and is conveniently, but not necessarily, separated from it by means of a dividing wall 60. The electric heater 56 can be assembled, by means of suitable fixing means 64, on a supporting wall flange 62, with the interpositioning of a washer G, to allow it to be in a raised positioned with respect to the ground.

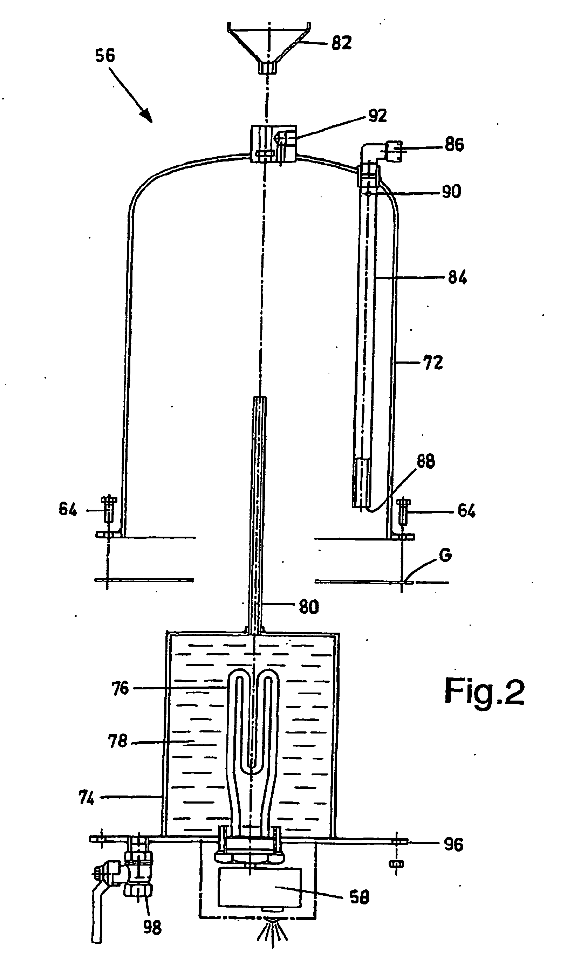

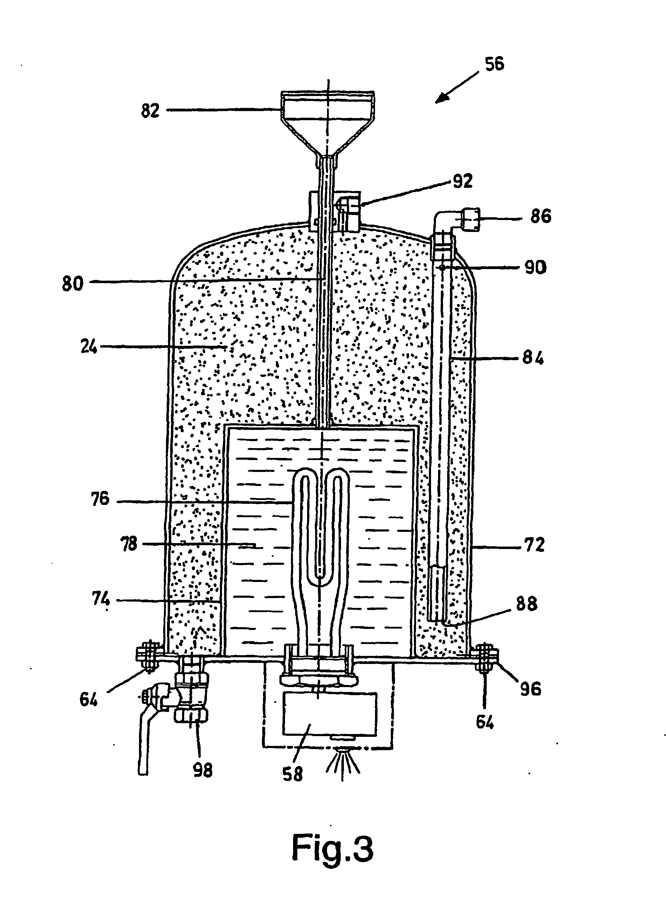

With reference to figures 2 and 3, according to an embodiment example of the invention, it can be seen that the electric heater 56 is made up of a tank consisting of a first outer cylindrical container 72 suitable for containing the recirculating liquid 24, fed as described hereunder. A second cylindrical container 74, smaller and housed inside the outer container 72, contains one or more electric resistances 76 immersed in a heating liquid 78 and controlled by a thermostat 58. The internal container 74 is in communication with the outside environment through a tube 80, connected with an accumulation tank 82 which always ensures the presence of an optimum quantity of heating liquid 78 inside the internal container itself 74.

Suction and pumping means such as a pump 66, preferably of the pneumatic membrane type, are arranged for sucking the washing liquid 24 from the collection tank 22, by means of a supply duct 68, after filtration with a filter 70, situated inside the tank 22, for eliminating the gross impurities. The liquid 24 removed from the collection tank 22, i.e. that already used for the washing, is put back into circulation in the device 10 and is pressure injected, by means of the supply duct 68, onto the bottom of the outer container 72 of the electric heating group 56. More specifically, the outer container 72 is equipped with a tube 84 which communicates, by means of a connection 86, with the supply duct 68. The lower outlet mouth 88 of the tube 84 is situated in correspondence with the bottom of the outer container 72, in order to facilitate the removal of the dregs from the recirculating liquid 24 once it has been introduced into the electric heating group 56. In the upper part of the tube 84, in correspondence with the connection 86, there is also a small pass-through hole 90 which prevents the outer container 72 from being emptied of the recirculation liquid 24 when the washing device 10 is not functioning.

The electric resistance 76 heats the liquid 78 contained in the inner container 74 and said liquid 78, in turn, heats the recirculation liquid 24 introduced into the outer container 72 of the electric heater 56, by irradiation. The recirculation liquid 24 thus heated is expelled under pressure from the electric heater 56 through an outlet connection 92 and is sent, through a discharge duct 94, to the automatic washing nozzles or ejectors 34, the sprayers 36 and/or to the manual washing brush 38. The outlet connection 92 is situated in the highest point of the outer container 72 to prevent the entry of air, inside the electric heating group 56 and relative supply ducts 68 and discharge ducts 94, which would cause a decrease in pressure in the recirculation liquid 24.

The electric resistance 76 is positioned in the inner container 74 to avoid its direct contact with the recirculation liquid 24, which could dirty said electric resistance 76 limiting its functionality. Furthermore, if the boxed casing 12 of the washing device 10 is positioned in an environment with the presence of potentially explosive gases, the pump 66, in the absence of the recirculation liquid 24 in the collection tank 22, could suck and inject air mixed with gas into the tank of the heating group 56. The presence of the internal container 74 therefore prevents this air/gas mixture from entering into direct contact with the electric resistance 76, thus avoiding possible explosions.

It is possible to completely empty the recirculation liquid 24 from the tank of the electric heating group 56 through a discharge valve 98, for example for cleaning and/or dismantling operations, as shown in figure 2, of the electric heating group itself 56. By dismantling the bolts 64, in fact, it is possible to remove the lower base 96 on which the discharge valve 98 is situated and on which the internal part of the electric heating group 56 is welded, thus allowing its internal cleaning.

From what is described above with reference to the figures, it is evident how a washing device for spray guns and their components according to the invention is particularly useful and advantageous. The objectives mentioned in the preamble of the invention have therefore been achieved.

In particular, the use of recirculation water is advantageous for the following reasons:
- it avoids using an excessive quantity of clean water, taken from the water supply network, for washing the guns;
- it reduces pollution caused by the water/detergent mixture discharged from the washing device after use.

In addition, the possibility of positioning the electric heating group in a separate environment from the box of paints, in the absence of gas, and connecting it with tubes to the boxed casing of the washing device, through the wall which separates the two environments, allows the "ATEX" marking to be easily obtained on the washing group positioned inside the box of paints. The electric heating group, situated outside, on the other hand, does not require "ATEX" marking and is therefore much more economical with respect to the washing devices of guns equipped with an integrated electric heater.

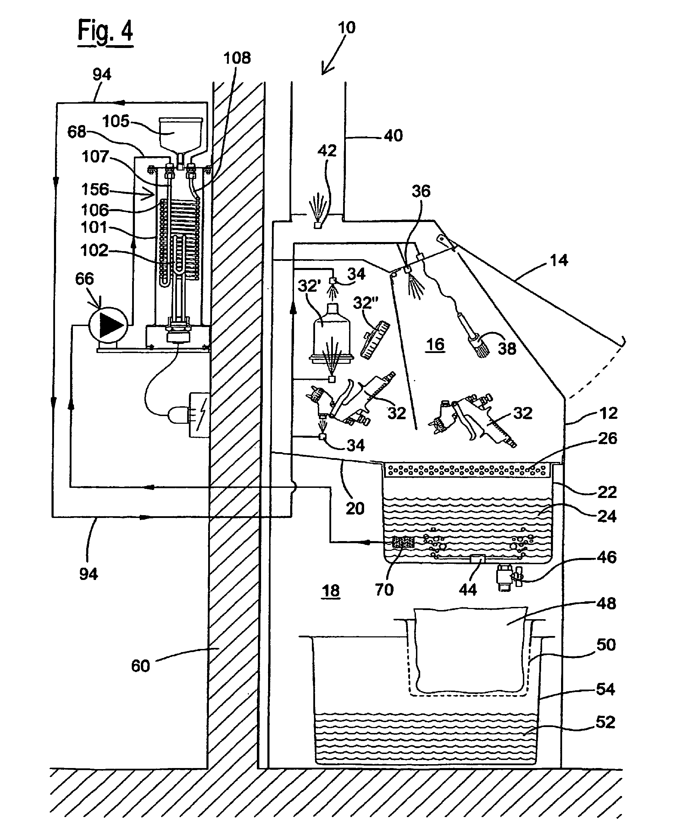

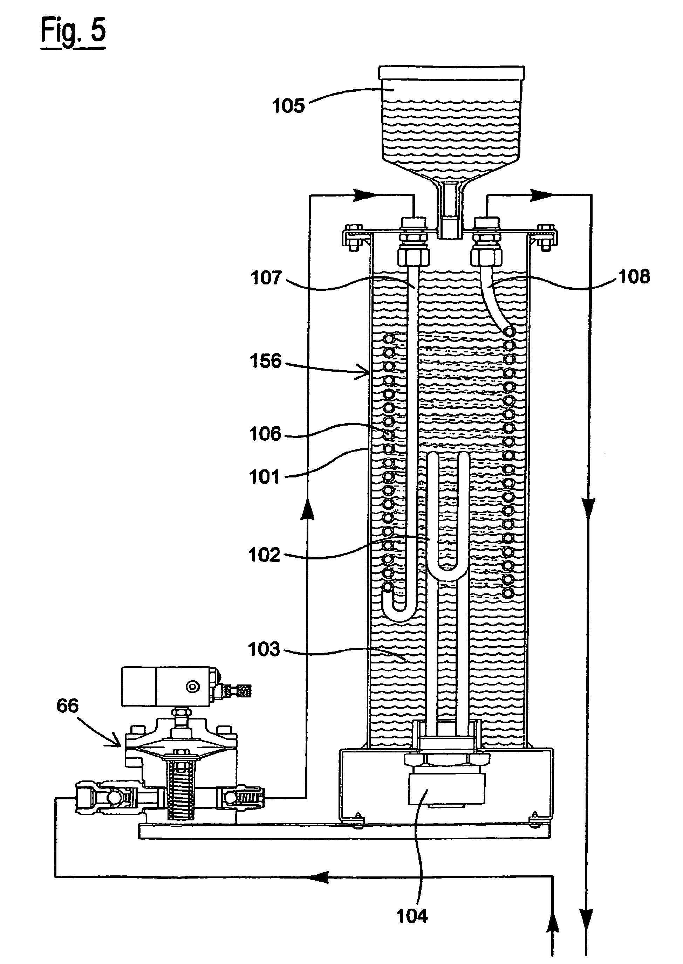

Figures 4 and 5 illustrate another embodiment of the invention in which the elements identical to those of the embodiment of figures 1-3 are indicated with the same reference numbers.

This further embodiment of the invention differs from that of figures 1-3, as it proposes another type of electric heater 156 instead of the heater 56.

The heater of figures 4-5 is indicated as a whole with 156 and consists of a container 101 in which one or more electric resistances 102 immersed in a heating liquid 103 and controlled by a thermostat 104, are housed. The heating liquid 103 is fed through a tank 105. The container 101 also contains a tubular copper coil 106 which envelops the resistance 102. A supply duct 107 and an outlet duct 108 are associated with said coil 106, for the feeding and discharge of the washing liquid 24 sucked by the pump 66, respectively. The liquid 24 is thus circulated through the coil 106 and is heated by the hot liquid 103.

With this different embodiment, it is possible to obtain an optimum thermal exchange between the liquid 103 and liquid 24.

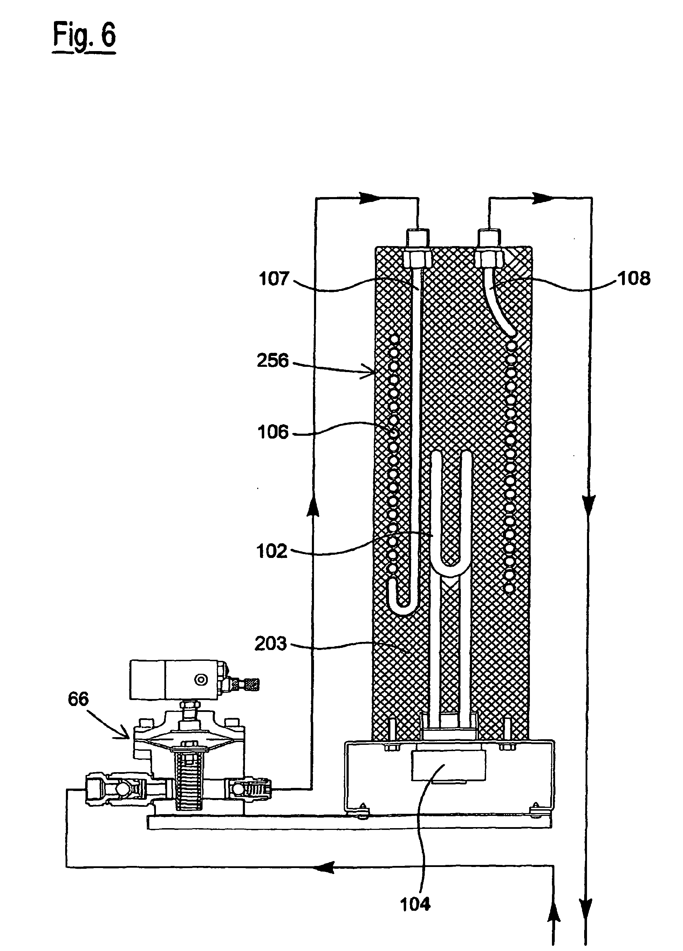

Figure 6 illustrates a heating group 256 in which the resistance 102 and coil 106 are immersed inside a metallic block 203, instead of inside a liquid, as in the embodiment of figures 4 and 5. The block 203 can naturally be produced without the container 101.

The forms and dimensions of the elements of the washing device for spray guns and their components according to the invention, as also the materials used, can differ from those shown for purely illustrative and non-limiting purposes in the drawings.

The essence of the invention is a washing device comprising a washing surface, for example a grid on which the guns can be washed manually by means of a brush. A tank 22 or similar device, for example a bin, for the collection of the recirculation liquid 24 and a heating group where the liquid 24 is never in direct contact with the heating means, are associated with the washing surface.

The protection scope of the invention is therefore delimited by the enclosed claims.

## Claims

1. A washing device (10) for spray guns (32) and their components (32', 32"), comprising a washing area (16) and an area (18) for the collection and feeding of the washing liquids, said washing area (16) comprising at least means (38) for the washing of said spray guns (32) and their components (32', 32"), said collection area (18) comprising at least one collection tank (22) of the washing liquid (24) already used, further comprising at least one electric heating group (56, 156,256), suction and pumping means (66) for sucking the washing liquid (24) already used from said collection tank (22) by means of a supply duct (68) connected to said electric heating group (56, 156,256), heating means (76,102) contained in said electric heating group (56, 156,256), for the heating of the liquid (24), and a discharge duct (94) for sending the liquid (24), heated by said electric heating group (56, 156,256), to said means (38) for the washing of said spray guns (32) and their components (32', 32"), **characterized in that**
said washing area (16) and said area (18) for the collection and feeding of the washing liquid being enclosed in a boxed casing (12), said boxed casing (12) being separate from said electric heating group (56,156,256) and conneted thereto with tubes for said washing liquid (24), said heating means (76,102) of said electric heating group (56,156,256) being positioned so as to avoid direct contact with said washing liquid (24).

2. The washing device (10) according to claim 1, **characterized in that** said electric heating group (56, 156,256) comprises a tank consisting of a first outer container (72), suitable for containing the recirculation liquid (24), and a second internal container (74), housed in said outer container (72) and containing said heating means (76).

3. The washing device (10) according to claim 2, **characterized in that** said heating means (76) comprise one or more electric resistances immersed in a heating liquid (78) and controlled by a thermostat (58), said heating liquid (78) heating the recirculation liquid (24) contained in said outer container (72) by irradiation.

4. The washing device (10) according to claim 3, **characterized in that** said internal container (74) is put in communication with the outside environment by means of a tube (80), connected with an accumulation tank (82) which always ensures the presence of an optimum quantity of heating liquid (78) inside said internal container (74).

5. The washing device (10) according to claim 2, **characterized in that** said outer container (72) is equipped with a tube (84) communicating, by means of a connection (86), with said supply duct (68), the lower outlet mouth (88) of said tube (84) being situated in correspondence with the bottom of said outer container (72) so as to facilitate the removal of the dregs from the recirculation liquid (24) once it has been introduced into said electric heating group (56).

6. The washing device (10) according to claim 5, **characterized in that** in the upper part of said tube (84), in correspondence with said connection (86), there is also a small pass-through hole (90) which prevents said outer container (72) from being emptied of the recirculation liquid (24) when said washing device (10) is not functioning.

7. The washing device (10) according to claim 5, **characterized in that** said discharge duct (94) is connected to said outer container (72) by means of an outlet connection (92) situated in the highest point of said outer container (72), to prevent the entry of air inside said electric heating group (56) and said supply ducts (68) and discharge ducts (94) which would cause a reduction in pressure of the recirculation liquid (24).

8. The washing device (10) according to claim 1, **characterized in that** said suction and pumping means (66) preferably comprise a pump of the pneumatic membrane type.

9. The washing device (10) according to claim 8, also comprising a filter (70), situated inside said collection tank (22), for the elimination of the gross impurities from the washing liquid (24) already used.

10. The washing device (10) according to claim 1, **characterized in that** said electric heating group (56) is equipped with a discharge valve (98) which allows the complete emptying of the recirculation liquid (24) from said electric heating group (56) for cleaning operations.

11. The washing device (10) according to claim 1, **characterized in that** said discharge valve (98) is situated on a lower base (96) of said electric heating group (56), said lower base (96) being disassemblable to allow internal cleaning operations of said electric heating group (56).

12. The washing device (10) according to claim 1, **characterized in that** said electric heating group (56) is assembled, by means of suitable fixing means (64), on a supporting wall flange (62) to allow it to be in a raised position with respect to the ground.

13. The washing device (10) according to claim 1, **characterized in that** a gridded or perforated surface (26) rests firmly and removably on said collection tank (22) of the washing liquid (24) already used, which acts as a support for said spray guns (32) and their components (32', 32") to be washed and for draining the washing liquid (24) towards the underlying collection tank (22).

14. The washing device (10) according to claim 13, **characterized in that** said collection tank (22) is equipped with a mixer (44) for the washing liquid (24).

15. The washing device (10) according to claim 13, **characterized in that** said collection tank (22) is equipped with a discharge valve (46) for transferring the washing liquid (24) into a container (54) situated below said collection tank (22), for the filtration and separation of the paint after coagulation.

16. The washing device (10) according to claim 1, **characterized in that** said electric heater 156 consists of a container (101) in which at least one electric resistance (102) immersed in a heating liquid (103) is housed, said container (101) also housing a tubular coil (106) enveloping said resistance (102), a supply duct (107) and an outlet duct (108) being associated with said coil (106), for the feeding and discharge of the washing liquid (24) sucked by the pump (66), respectively.

17. The washing device (10) according to claim 1, **characterized in that** said electric heater (256) consists of a metallic block (203) in which said heating means (102) are immersed, and a coil (106) with which a supply duct (107) and an outlet duct (108) are associated, for the feeding and discharge of the washing liquid (24) sucked by the pump (66), respectively.

18. The washing device (10) according to claim 1, **characterized in that** it comprises a boxed containment casing (12).

19. The washing device (10) according to claim 18, **characterized in that** said electric heating group (56, 156, 256) is separated from said casing (12) by means of a dividing wall (60).

20. The washing device (10) according to claim 1, **characterized in that** said washing area (16) comprises washing means (34,36,38) for the automatic and manual washing of the guns and their components.

## Patentansprüche

1. Waschvorrichtung (10) für Sprühpistolen (32) und deren Komponenten (32', 32"), umfassend einen Waschbereich (16) und einen Bereich (18) für das Sammeln und Zuführen der Waschflüssigkeiten, wobei der Waschbereich (16) zumindest ein Mittel (38) für das Waschen der Sprühpistolen (32) und deren Komponenten (32', 32") umfasst, wobei der Sammelbereich (18) zumindest einen Sammeltank (22) für die bereits verwendete Waschflüssigkeit (24) umfasst, ferner umfassend zumindest eine elektrische Heizgruppe (56, 156, 256), ein Saug- und Pumpmittel (66), um die bereits verwendete Waschflüssigkeit (24) mittels einer Zufuhrleitung (68), die mit der elektrischen Heizgruppe (56, 156, 256) verbunden ist, aus dem Sammeltank (22) zu anzusaugen, ein Heizmittel (76, 102), das in der elektrischen Heizgruppe (56, 156, 256) für das Aufheizen der Flüssigkeit (24) enthalten ist, und eine Ablassleitung (94), um die Flüssigkeit (24), die durch die elektrische Heizgruppe (56, 156, 256) aufgeheizt ist, zu dem Mittel (38) für das Waschen der Sprühpistolen (32) und deren Komponenten (32', 32") zu schicken,
**dadurch gekennzeichnet, dass**
der Waschbereich (16) und der Bereich (18) für das Sammeln und Zuführen der Waschflüssigkeit in einem eingepackten Gehäuse (12) eingeschlossen sind, wobei das eingepackte Gehäuse (12) von der elektrischen Heizgruppe (56, 156, 256) getrennt und mit dieser mittels Rohrleitungen für die Waschflüssigkeit (24) verbunden ist, wobei das Heizmittel (76, 102) der elektrischen Heizgruppe (56, 156, 256) derart angeordnet ist, dass ein direkter Kontakt mit der Waschflüssigkeit (24) vermieden wird.

2. Waschvorrichtung (10) nach Anspruch 1,
**dadurch gekennzeichnet, dass** die elektrische Heizgruppe (56, 156, 256) einen Tank umfasst, der aus einem ersten äußeren Behälter (72), der geeignet ist, um die Rezirkulationsflizssigkeit (24) zu enthalten, und einen zweiten inneren Behälter (74) besteht, der in dem äußeren Behälter (72) untergebracht ist und das Heizmittel (76) enthält.

3. Waschvorrichtung (10) nach Anspruch 2,
**dadurch gekennzeichnet, dass** das Heizmittel (76) einen oder mehrere elektrische Widerstände umfasst, die in eine Heizflüssigkeit (78) eingetaucht sind und durch einen Thermostat (58) gesteuert werden, wobei die Heizflüssigkeit (78) die Rezirkulationsflüssigkeit (24), die in dem äußeren Behälter (72) enthalten ist, durch Bestrahlung aufheizt.

4. Waschvorrichtung (10) nach Anspruch 3,
**dadurch gekennzeichnet, dass** der innere Behälter (74) mittels einer Rohrleitung (80), die mit einem Speicherungstank (82) verbunden ist, der stets das Vorhandensein einer optimalen Menge an Heizflüssigkeit (78) im Innern des inneren Behälters (74) sicherstellt, mit der Außenumgebung in Verbindung gebracht ist.

5. Waschvorrichtung (10) nach Anspruch 2,
**dadurch gekennzeichnet, dass** der äußere Behälter (72) mit einer Rohrleitung (84) ausgestattet ist, die mittels eines Verbindungselements (86) mit der Zufuhrleitung (68) in Verbindung steht, wobei die untere Auslassmündung (88) der Rohrleitung (84) in Verbindung mit der Unterseite des äußeren Behälters (72) angeordnet ist, um **dadurch** das Entfernen des Bodensatzes aus der Rezirkulationsflüssigkeit (24) zu erleichtern, sobald diese in die elektrische Heizgruppe (56) eingeleitet wurde.

6. Waschvorrichtung (10) nach Anspruch 5,
**dadurch gekennzeichnet , dass** in dem oberen Teil der Rohrleitung (84) in Verbindung mit dem Verbindungselement (86) auch ein kleines Durchgangsloch (90) vorhanden ist, das verhindert, dass die Rezirkulationsflüssigkeit (24) aus dem äußeren Behälter (72) entleert wird, wenn die Waschvorrichtung (10) nicht funktioniert.

7. Waschvorrichtung (10) nach Anspruch 5,
**dadurch gekennzeichnet , dass** die Ablassleitung (94) mittels eines Auslass-Verbindungselements (92), das an dem höchsten Punkt des äußeren Behälters (72) angeordnet ist, mit dem äußeren Behälter (72) verbunden ist, um den Eintritt von Luft in das Innere der elektrischen Heizgruppe (56) und der Zufuhrleitungen (68) sowie der Ablassleitungen (94) zu verhindern, was eine Verringerung des Drucks der Rezirkulationsflüssigkeit (24) bewirken würde.

8. Waschvorrichtung (10) nach Anspruch 1,
**dadurch gekennzeichnet , dass** das Saug- und Pumpmittel (66) vorzugsweise eine Pumpe vom pneumatischen Membrantyp umfasst.

9. Waschvorrichtung (10) nach Anspruch 8,
auch einen Filter (70) umfassend, der im Innern des Sammeltanks (22) für die Beseitigung von groben Verunreinigungen aus der bereits verwendeten Waschflüssigkeit (24) angeordnet ist.

10. Waschvorrichtung (10) nach Anspruch 1,
**dadurch gekennzeichnet , dass** die elektrische Heizgruppe (56) mit einem Ablassventil (98) ausgestattet ist, das die vollständige Entleerung der Rezirkulationsflüssigkeit (24) aus der elektrischen Heizgruppe (56) für Reinigungsmaßnahmen ermöglicht.

11. Waschvorrichtung (10) nach Anspruch 1,
**dadurch gekennzeichnet , dass** das Ablassventil (98) an einer unteren Basis (96) der elektrischen Heizgruppe (56) angeordnet ist, wobei die untere Basis (96) demontierbar ist, um innere Reinigungsmaßnahmen der elektrischen Heizgruppe (56) zu ermöglichen.

12. Waschvorrichtung (10) nach Anspruch 1,
**dadurch gekennzeichnet , dass** die elektrische Heizgruppe (56) mittels eines geeigneten Befestigungsmittels (64) an einem tragenden Wandflansch (62) montiert ist, um zu ermöglichen, dass sich diese bezogen auf den Boden in einer erhöhten Position befindet.

13. Waschvorrichtung (10) nach Anspruch 1,
**dadurch gekennzeichnet, dass** eine gerasterte oder perforierte Fläche (26) fest und entfernbar auf dem Sammeltank (22) der bereits verwendeten Waschflüssigkeit (24) ruht, welche Fläche als eine Lagerung für die Sprühpistolen (32) und deren Komponenten (32', 32"), die gewaschen werden sollen, und zum Ableiten der Waschflüssigkeit (24) in Richtung des darunterliegenden Sammeltanks (22) dient.

14. Waschvorrichtung (10) nach Anspruch 13,
**dadurch gekennzeichnet, dass** der Sammeltank (22) mit einer Mischvorrichtung (44) für die Waschflüssigkeit (24) ausgestattet ist.

15. Waschvorrichtung (10) nach Anspruch 13,
**dadurch gekennzeichnet, dass** der Sammeltank (22) mit einem Ablassventil (46) ausgestattet ist, um die Waschflüssigkeit (24) in einen Behälter (54) zu übertragen, der für die Filterung und Trennung der Farbe nach einer Gerinnung unterhalb des Sammeltanks (22) angeordnet ist.

16. Waschvorrichtung (10) nach Anspruch 1,
**dadurch gekennzeichnet , dass** die elektrische Heizeinrichtung (156) aus einem Behälter (101) besteht, in dem zumindest ein elektrischer Widerstand (102) untergebracht ist, der in eine Heizflüssigkeit (103) eingetaucht ist, wobei in dem Behälter (101) auch eine Rohrwindung (106), die den Widerstand (102) umhüllt, eine Zufuhrleitung (107) und eine Auslassleitung (108) untergebracht sind, die mit der Windung (106) verbunden sind, um die Waschflüssigkeit (24), die durch die Pumpe (66) angesaugt wird, zuzuführen bzw. abzulassen.

17. Waschvorrichtung (10) nach Anspruch 1,
**dadurch gekennzeichnet, dass** die elektrische Heizeinrichtung (256) aus einem Metallblock (203), in dem das Heizmittel (102) eingetaucht ist, und aus einer Windung (106) besteht, mit der eine Zufuhrleitung (107) und eine Auslassleitung (108) verbunden sind, um die Waschflüssigkeit (24), die durch die Pumpe (66) angesaugt wird, zuzuführen bzw. abzulassen.

18. Waschvorrichtung (10) nach Anspruch 1,
**dadurch gekennzeichnet, dass** diese ein eingepacktes Behältergehäuse (12) umfasst.

19. Waschvorrichtung (10) nach Anspruch 18,
**dadurch gekennzeichnet, dass** die elektrische Heizgruppe (56, 156, 256) mittels einer Trennwand (60) von dem Gehäuse (12) getrennt ist.

20. Waschvorrichtung (10) nach Anspruch 1,
**dadurch gekennzeichnet, dass** der Waschbereich (16) ein waschendes Mittel (34, 36, 38) für das automatische und manuelle Waschen der Pistolen und ihrer Komponenten umfasst.

## Revendications

1. Dispositif de lavage (10) pour des pistolets pulvérisateurs (32) et leurs composants (32', 32"), comprenant une zone de lavage (16) et une zone (18) pour la collecte et l'alimentation des liquides de lavage, ladite zone de lavage (16) comprenant au moins un moyen (38) pour le lavage desdits pistolets pulvérisateurs (32) et de leurs composants (32', 32"), ladite zone de collecte (18) comprenant au moins une cuve de collecte (22) du liquide de lavage (24) déjà utilisé, comprenant en outre au moins un groupe chauffant électrique (56, 156, 256), un moyen d'aspiration et de pompage (66) pour aspirer le liquide de lavage (24) déjà utilisé hors de ladite cuve de collecte (22) au moyen d'une conduite d'alimentation (68) connectée audit groupe chauffant électrique (56, 156, 256), un moyen de chauffage (76, 102) contenu dans ledit groupe chauffant électrique (56, 156, 256) pour chauffer le liquide (24), et une conduite de refoulement (94) pour envoyer le liquide (24), chauffé par ledit groupe chauffant électrique (56, 156, 256), vers ledit moyen (38) pour le lavage desdits pistolets pulvérisateurs (32) et de leurs composants (32', 32"), **caractérisé en ce que** ladite zone de lavage (16) et ladite zone (18) pour la collecte et l'alimentation du liquide de lavage sont enfermées dans un carter fermé (12), ledit carter fermé (12) étant séparé dudit groupe chauffant électrique (56, 156, 256) et connecté à celui-ci avec des tubes pour ledit liquide de lavage (24), ledit moyen de chauffage (76, 102) du groupe chauffant électrique (56, 156, 256) étant positionné de manière à éviter un contact direct avec ledit liquide de lavage (24).

2. Dispositif de lavage (10) selon la revendication 1, **caractérisé en ce que** ledit groupe chauffant électrique (56, 156, 256) comprend une cuve constituée d'un premier récipient, extérieur, (72), adapté pour contenir le liquide de recyclage (24), et un deuxième récipient, intérieur, (74), logé dans ledit récipient extérieur (72) et contenant ledit moyen de chauffage (76).

3. Dispositif de lavage (10) selon la revendication 2, **caractérisé en ce que** ledit moyen de chauffage (76) comprend une ou plusieurs résistances électriques immergées dans un liquide de chauffage (78) et commandées par un thermostat (58), ledit liquide de chauffage (78) chauffant le liquide de recyclage (24) contenu dans ledit récipient extérieur (72) par irradiation.

4. Dispositif de lavage (10) selon la revendication 3, **caractérisé en ce que** ledit récipient intérieur (74) est mis en communication avec l'environnement extérieur au moyen d'un tube (80), connecté à un réservoir d'accumulation (82) qui assure toujours la présence d'une quantité optimale de liquide de chauffage (78) à l'intérieur dudit récipient intérieur (74).

5. Dispositif de lavage (10) selon la revendication 2, **caractérisé en ce que** ledit récipient extérieur (72) est équipé d'un tube (84) communiquant, au moyen d'une connexion (86), avec ladite conduite d'alimentation (68), l'embouchure de sortie inférieure (88) dudit tube (84) étant située en correspondance avec le fond dudit récipient extérieur (72) de manière à faciliter le retrait des dépôts du liquide de recyclage (24) une fois qu'il a été introduit dans ledit groupe chauffant électrique (56).

6. Dispositif de lavage (10) selon la revendication 5, **caractérisé en ce que** dans la partie supérieure dudit tube (84), en correspondance avec ladite connexion (86), se trouve aussi un petit trou traversant (90) qui empêche ledit récipient extérieur (72) d'être vidé du liquide de recyclage (24) quand ledit dispositif de lavage (10) n'est pas en fonctionnement.

7. Dispositif de lavage (10) selon la revendication 5, **caractérisé en ce que** ladite conduite de refoulement (94) est connectée audit récipient extérieur (72) au moyen d'une connexion de sortie (92) située au point le plus haut dudit récipient extérieur (72), pour empêcher l'entrée d'air à l'intérieur dudit groupe chauffant électrique (56) et desdites conduites d'alimentation (68) et conduites de refoulement (94) qui provoquerait une réduction de la pression du liquide de recyclage (24).

8. Dispositif de lavage (10) selon la revendication 1, **caractérisé en ce que** ledit moyen d'aspiration et de pompage (66) comprend de préférence une pompe du type à membrane pneumatique.

9. Dispositif de lavage (10) selon la revendication 8, comprenant en outre un filtre (70) situé à l'intérieur de ladite cuve de collecte (22) pour l'élimination des grosses impuretés du liquide de lavage (24) déjà utilisé.

10. Dispositif de lavage (10) selon la revendication 1, **caractérisé en ce que** ledit groupe chauffant électrique (56) est équipé d'un robinet de décharge (98) qui permet la vidange complète du liquide de recyclage (24) dudit groupe chauffant électrique (56) pour les opérations de nettoyage.

11. Dispositif de lavage (10) selon la revendication 1, **caractérisé en ce que** ledit robinet de décharge (98) est situé sur une base inférieure (96) dudit groupe chauffant électrique (56), ladite base inférieure (96) étant démontable pour permettre les opérations de nettoyage interne dudit groupe chauffant électrique (56).

12. Dispositif de lavage (10) selon la revendication 1, **caractérisé en ce que** ledit groupe chauffant électrique (56) est monté, à l'aide d'un moyen de fixation approprié (64), sur un rebord de paroi de support (62) pour lui permettre d'être dans une position surélevée par rapport au sol.

13. Dispositif de lavage (10) selon la revendication 1, **caractérisé en ce qu'**une surface à grille ou perforée (26) repose solidement et de façon amovible sur ladite cuve de collecte (22) du liquide de lavage (24) déjà utilisé, qui sert de support pour lesdits pistolets pulvérisateurs (32) et leurs composants (32', 32") à laver et pour évacuer le liquide de lavage (24) vers la cuve de collecte (22) sous-jacente.

14. Dispositif de lavage (10) selon la revendication 13, **caractérisé en ce que** ladite cuve de collecte (22) est équipée d'un mélangeur (44) pour le liquide de lavage (24).

15. Dispositif de lavage (10) selon la revendication 13, **caractérisé en ce que** ladite cuve de collecte (22) est équipée d'un robinet de décharge (46) pour transférer le liquide de lavage (24) dans un récipient (54) situé sous ladite cuve de collecte (22), pour le filtrage et la séparation de la peinture après coagulation.

16. Dispositif de lavage (10) selon la revendication 1, **caractérisé en ce que** ledit groupe chauffant électrique (156) est constitué d'un récipient (101) dans lequel est logée au moins une résistance électrique (102) immergée dans un liquide de chauffage (103), ledit récipient (101) contenant aussi un serpentin tubulaire (106) enveloppant ladite résistance (102), une conduite d'alimentation (107) et une conduite de sortie (108) étant associées audit serpentin (106), respectivement pour l'introduction et le refoulement du liquide de lavage (24) aspiré par la pompe (66).

17. Dispositif de lavage (10) selon la revendication 1, **caractérisé en ce que** ledit groupe chauffant électrique (256) est constitué d'un bloc métallique (203) dans lequel est immergé ledit moyen de chauffage (102), et d'un serpentin (106) auquel sont associées une conduite d'alimentation (107) et une conduite de sortie (108), respectivement pour l'introduction et le refoulement du liquide de lavage (24) aspiré par la pompe (66).

18. Dispositif de lavage (10) selon la revendication 1, **caractérisé en ce qu'**il comprend un carter de confinement fermé (12).

19. Dispositif de lavage (10) selon la revendication 18, **caractérisé en ce que** ledit groupe chauffant électrique (56, 156, 256) est séparé dudit carter (12) au moyen d'une paroi de séparation (60).

20. Dispositif de lavage (10) selon la revendication 1, **caractérisé en ce que** ladite zone de lavage (16) comprend un moyen de lavage (34, 36, 38) pour le lavage automatique et manuel des pistolets et de leurs composants.
